# EUROPÄISCHE PATENTANMELDUNG

(11) **EP 2 594 929 A2**
(43) Veröffentlichungstag der Anmeldung: **22.05.2013**
(21) Anmeldenummer: 12192261.1
(22) Anmeldetag: 12.11.2012
(51) Int. Cl.: G01N 27/87

(54) **Streuflusssonde zur zerstörungsfreien Streuflussprüfung von Körpern aus magnetisierbarem Werkstoff**

(30) Priorität: 16.11.2011 DE 102011055409
(71) Anmelder: V & M Deutschland GmbH, 40472 Düsseldorf (DE)
(72) Erfinder: Kaack, Michael, 44892 Bochum (DE); Fischer, Gert, 47669 Wachtendonk (DE); Nemitz, Oliver, 47057 Duisburg (DE); Schmitte, Till, 44807 Bochum (DE); Nitsche, Stefan, 45475 Mülheim (DE)
(74) Vertreter: Moser & Götze

(57) **Zusammenfassung**

Streuflusssonde zur zerstörungsfreien Streuflussprüfung von Körpern aus magnetisierbarem Werkstoff, insbesondere von Rohren (1) aus ferromagnetischem Stahl, mit mehreren geradlinig hintereinander angeordneten Sensoren (5) zur Detektion von oberflächennahen Fehlern (F1, F2, F3) in dem Körper. Damit die Sonde in einer Hauptprüfungsrichtung eine erweiterte Richtcharakteristik aufweist, wird vorgeschlagen, dass mindestens zwei gleichartige Sensoren (5, 5') in unterschiedlicher Winkelausrichtung gegenüber der Hauptprüfungsrichtung übereinander, nebeneinander oder ineinander liegend als Sensorpaket (4) angeordnet und zusammengeschaltet sind, dass die hintereinander angeordneten Sensorpakete (4) einzelnen vom erzeugten Streufluss eines vorhandenen Fehlers beaufschlagbar sind und die einzelnen Sensoren (5, 5') des Sensorpaketes (4) einen so geringen Abstand zueinander aufweisen, dass die zusammengeschalteten Sensoren (5, 5') eines Sensorpaketes (4) gemeinsam vom erzeugten Streufluss eines vorhandenen Fehlers beaufschlagt werden.

## Beschreibung

Die Erfindung betrifft eine Streuflusssonde zur zerstörungsfreien Streuflussprüfung von Körpern aus magnetisierbarem Werkstoff, insbesondere von Rohren aus ferromagnetischem Stahl, mit mehreren geradlinig hintereinander angeordneten Sensoren zur Detektion von oberflächennahen Fehlern in dem Körper.

Es ist allgemein bekannt, zur zerstörungsfreien und oberflächennahen Prüfung von Körpern aus magnetisierbaren Werkstoffen das sogenannte Streuflussverfahren einzusetzen. Hierfür werden die zu prüfenden Körper temporär durch Elektromagnete, Zylinderspulen oder Stromdurchflutung magnetisiert. In einem homogenen und fehlerfreien ferromagnetischen Werkstoff verteilen sich die magnetischen Feldlinien gleichmäßig über die Oberfläche. Falls die Homogenität des Werkstoffs durch oberflächennahe Ungänzen, wie beispielsweise Risse, Lunker, Einschlüsse, Poren oder Dopplungen gestört ist, können magnetische Feldlinien als sogenannter Streufluss außerhalb des Werkstücks im Bereich der Ungänzen austreten. Dieser Streufluss kann von Sonden berührungslos oder berührend detektiert werden. Eine entsprechende Prüfeinrichtung umfasst üblicherweise eine Magnetisierungseinheit, eine Handhabungseinheit für den zu prüfenden Körper, einen Prüfschuh mit den Streuflusssonden, eine Auswerteeinheit sowie gegebenenfalls eine Entmagnetisierungseinheit. Als Streuflusssonden zum Messen der magnetischen Streuflussdichte kommen zum Beispiel Induktionsspulen, Giant-Magneto-Resistance-Sensoren (GMR-Sensoren), Anisotropic-Magneto-Resistent-Sensoren (AMR), Tunneling-Magneto-Resistent-Sensoren (TMR) oder Hall-Sensoren zum Einsatz.

Diese bekannte Streuflussprüfung wird beispielsweise auch bei Rohren aus ferromagnetischem Stahl angewendet, um in Längsrichtung der Rohre gesehen längs- und querorientierte Ungänzen sowie Ungänzen an den Innen- und Außenoberflächen zu detektieren.

Üblicherweise wird bei einer Prüfung eine Gleichfeldmagnetisierung des Rohres eingesetzt, da hiermit Fehler an der Außenoberfläche und an der Innenoberfläche des Rohres detektiert werden können. Mit einer Wechselfeldmagnetisierung, die beispielsweise bei Stangenmaterial eingesetzt wird, können in der Regel nur Fehler an der Außenoberfläche detektiert werden.

Fehler, die an der Außen- oder Innenoberfläche des Rohres liegen, können unterschiedliche Ursachen haben. Diese können beispielsweise durch fehlerhafte Innenwerkzeuge oder Walzen verursacht worden sein oder auch aus Fehlern im Vormaterial herrühren. Mit der Streuflussprüfung ist eine frühzeitige Fehlereingrenzung und Fehlererkennung möglich, wodurch nach entsprechenden Korrekturmaßnahmen hohe Ausfall- und Nacharbeitungsquoten vermieden werden können.

Für eine Prüfung des Rohres auf Längsfehler wird ein Magnetfeld rechtwinklig zur Längsachse des Rohres aufgebracht, so dass dessen magnetische Feldlinien rechtwinklig zur Längserstreckung eines sich ideal in Längsrichtung des Rohres erstreckenden Längsfehlers ausgerichtet sind. Somit verlaufen bei einer Längsfehlerprüfung die magnetischen Feldlinien in Umfangsrichtung des Rohres. Im Zusammenhang mit einer Längsfehlerprüfung wird dann die Umfangsrichtung des Rohres auch als Hauptprüfungsrichtung bezeichnet. Für eine Querfehlerprüfung wird ein Magnetfeld parallel zur Längsachse des Rohres aufgebracht, so dass dessen magnetische Feldlinien rechtwinklig zur Längserstreckung eines sich ideal in Umfangsrichtung des Rohres erstreckenden Querfehlers ausgerichtet sind. Somit verlaufen bei einer Querfehlerprüfung die magnetischen Feldlinien in Längsrichtung des Rohres. Im Zusammenhang mit einer Querfehlerprüfung wird dann die Längsrichtung des Rohres auch als Hauptprüfungsrichtung bezeichnet. Je nachdem ob nun eine Längs- oder Querfehlerprüfung vorgenommen wird, gibt es zwar immer eine Hauptprüfungsrichtung, die aber je nach Prüfungsart entweder in Umfangsrichtung des Rohres oder in Längsrichtung des Rohres verläuft. Soll speziell nur auf Schrägfehler untersucht werden, so liegt die Hauptprüfungsrichtung in entsprechender Winkellage zur Längsachse bzw. Umfangsrichtung des Rohres.

Um die gesamte Oberfläche bei der Längsfehlerprüfung des Rohres zu erfassen, werden das Rohr und der Prüfkopf wendelförmig zueinander bewegt. Für eine Querfehlerprüfung wird üblicherweise um das Rohr ein Prüfkopf mit einem Sensorenkranz fest positioniert, durch den das Rohr in Längsrichtung bewegt wird. Zum Abgleich der Prüfeinrichtung werden eine oder mehrere auf einem Referenzwerkstück eingebrachte Nuten als Testfehlerreferenz verwendet. Die Nuten simulieren Längs-, Schräg- und Querfehler.

Aus der deutschen Patentschrift DE 198 23 453 C2 ist bereits eine Streuflusssonde zur zerstörungsfreien Prüfung von langgestreckten und rotationssymmetrischen Körpern, insbesondere von Rohren, auf Längs- oder Querfehler bekannt. Die Streuflusssonde besteht im Wesentlichen aus einer linealförmigen Leiterplatte, einem sogenannten Sensorlineal, auf deren dem zu prüfenden Körper zugewandten Seite eine Vielzahl von Spulenpaaren als Sensoren aufgedruckt ist. Es sind insgesamt 16 Spulenpaare vorgesehen, die in Längsrichtung der Leiterplatte gesehen im jeweils gleichen Abstand aufeinander folgend angeordnet sind. Jede einzelne Spule eines Spulenpaares weist eine langgestreckte im Wesentlichen stadionartige Wicklung auf, d. h. jede Wicklung ist gestreckt ringförmig mit einer zentralen Längsachse. Die Spulen eines Spulenpaares sind jeweils leicht schräg in Bezug auf die Längsrichtung der Leiterplatte angeordnet, so dass jeweils die Längsachse der Spulen und die Längsrichtung der Leiterplatte in etwa einen Winkel von 10° einschließen. Außerdem sind beide Spulen eines Paares in Längsrichtung der Leiterplatte gesehen seitlich mit Abstand nebeneinander angeordnet und in Längsrichtung der Leiterplatte zueinander versetzt, so dass in Längsrichtung der Leiterplatte gesehen die rechte Spule eines Paares etwa zwei Drittel der Spulenlänge gegenüber der linken Spule vorsteht. Hierbei sind die Spulen eines Paares nach rechts geneigt.

Mit der bekannten Streuflussprüfung werden mit zwei voneinander getrennten Prüfeinrichtungen in einer ersten Prüfung etwaige Längsfehler und in einer zweiten Prüfung Querfehler sicher erkannt. Bei der jeweiligen Prüfung wird das Magnetfeld jeweils in Hauptprüfungsrichtung senkrecht zu den zu detektierenden Längs- oder Querfehlern in den Prüfkörper eingebracht, wobei die einzelnen Spulenpaare jeweils separat von dem erzeugten Streuflussfeld einer Ungänze erfasst werden. Die Orientierung des Magnetfeldes liegt dabei immer in der Hauptprüfungsrichtung des Rohres.

Bei der Längs- und Querfehlerprüfung werden allerdings nur in einem begrenzten Maße schräg zur Magnetfeldrichtung verlaufende Schrägfehler erkannt, da die Sensitivität (Richtcharakteristik) der einzelnen Sensoren mit zunehmender Schräglage des Fehlers schnell abnimmt. Ebenso ist eine Schrägfehlerprüfung, bei der die Hauptprüfungsrichtung beispielsweise in einem Winkel von 45° zur Rohrlängsachse liegt, üblicherweise nicht geeignet in gleichem Maße auch Längs- und Querfehler zu detektieren.

Des Weiteren ist aus der Offenlegungsschrift US 2011/0167914 A1 eine in einer verlegten Öl- oder Gasleitung verfahrbare Prüfeinrichtung bekannt, die eine Vielzahl von Sensoren zur zerstörungsfreien Prüfung der Wand der Öl- oder Gasleitungen von innen aufweist. Unter den Sensoren sind auch Streuflusssensoren zu finden, die in Längsrichtung der Prüfeinrichtung gesehen in Gruppen radial und mehrere Gruppen hintereinander angeordnet sind. Die Streuflusssensoren der einzelnen Gruppen können in Bezug auf die Längsrichtung der zu prüfenden Öl- oder Gasleitung mit ihrer Richtcharakteristik unterschiedlich ausgerichtet sein.

Hiervon ausgehend liegt der vorliegenden Erfindung die Aufgabe zugrunde, eine Streuflusssonde zur zerstörungsfreien Streuflussprüfung von Körpern aus magnetisierbarem Werkstoff, insbesondere von Rohren aus ferromagnetischem Stahl, zu schaffen, die bezüglich einer Hauptprüfungsrichtung eine verbreiterte Richtcharakteristik aufweist und somit auch Fehler mit möglichst gleicher Signalstärke erfasst, die nicht optimal zur Hauptprüfungsrichtung ausgerichtet sind.

Diese Aufgabe wird durch eine Streuflusssonde mit den Merkmalen des Anspruchs 1 gelöst. Vorteilhafte Ausgestaltungen der Erfindung sind in den Ansprüchen 2 bis 15 angegeben.

Im Folgenden wird als Streuflusssonde eine Anordnung aus mehreren Streuflusssensoren verstanden, die linealförmig, d.h. geradlinig hintereinander, aus mehreren Streuflusssensoren besteht, wobei erfindungsgemäß die einzelnen Sensoren durch Sensorpakete ersetzt werden.

Erfindungsgemäß wird bei einer Streuflusssonde zur zerstörungsfreien Streuflussprüfung von Körpern aus magnetisierbarem Werkstoff, insbesondere von Rohren aus ferromagnetischem Stahl, mit mehreren geradlinig hintereinander angeordneten Sensoren zur Detektion von oberflächennahen Fehlern in dem Körper, bezüglich einer Hauptprüfungsrichtung eine erweiterte Richtcharakteristik dadurch erreicht, dass mindestens zwei gleichartige Sensoren in unterschiedlicher Winkelausrichtung gegenüber der Hauptprüfungsrichtung übereinander, nebeneinander oder ineinander liegend als Sensorpaket angeordnet und zusammengeschaltet sind, dass die hintereinander angeordneten Sensorpakete einzeln vom erzeugten Streufluss eines vorhandenen Fehlers beaufschlagbar sind und die einzelnen Sensoren des Sensorpaketes einen so geringen Abstand zueinander aufweisen, dass die zusammengeschalteten Sensoren eines Sensorpaketes gemeinsam vom erzeugten Streufluss eines vorhandenen Fehlers beaufschlagt werden. Somit werden auch Fehler mit möglichst gleicher Signalstärke erfasst, die nicht optimal zur Hauptprüfungsrichtung ausgerichtet sind. Im Zusammenhang mit der vorliegenden Erfindung wird der Begriff Hauptprüfungsrichtung - wie zuvor im Zusammenhang mit dem Stand der Technik beschreiben - verstanden.

Eine solche Sonde kann zur Quer- oder Längsfehlerprüfung eingesetzt werden und dort in einem erweiterten Winkelbereich auch Schrägfehler detektieren. Die Hauptprüfungsrichtungen liegen in diesen Fällen in Rohrachsrichtung beziehungsweise senkrecht dazu. Die Orientierung der Hauptprüfungsrichtung ist aber prinzipiell nicht beschränkt. So ist es denkbar, beispielsweise mit der Hauptprüfungsrichtung von 45° zur Rohrachse und einer Richtcharakteristik, die beispielsweise 30° überspannt, eine Prüfung auf Schrägfehler von 30° bis 60° durchzuführen.

Der Vorteil der erweiterten Richtcharakteristik liegt zum einen darin, dass Fehler mit solchen Schräglagen zur Hauptprüfungsrichtung nachgewiesen werden können, die nach bisherigem Stand der Technik nicht detektiert werden konnten. Zum anderen können auch bisher nachweisbare Fehler nun mit einem größeren Signal-Rausch-Verhältnis und somit mit einer erhöhten Nachweiswahrscheinlichkeit erkannt werden.

Im Zusammenhang mit der Erfindung ist unter Sensoren mit unterschiedlicher Winkelausrichtung gegenüber der Hauptprüfungsrichtung zu verstehen, dass die Erkennungsleistung der Sensoren jeweils von der Ausrichtung eines zu erkennenden Fehlers abhängig ist. Die Erkennungsleistung der Sensoren hängt somit von der Ausrichtung des Sensors zu der Lage des Fehlers wie beispielsweise einem Längs-, Schräg- oder Querfehler, ab. Jeder Sensor hat somit eine optimale Erkennungsleistung in Bezug auf einen bestimmt ausgerichteten Fehler. Erfindungsgemäß werden nun in einem Sensorpaket mehrere Sensoren verwendet, deren optimale Erkennungsleistung in Bezug auf einen bestimmt ausgerichteten Fehler voneinander abweicht. Somit sind deren optimale Erkennungswinkel zueinander unterschiedlich ausgerichtet. Hierdurch wird die Bandbreite der Erkennungsleistung gegenüber einem einzelnen Sensor erhöht.

Wesentlich bei der erfindungsgemäßen Sonde ist nicht, die Einzelkomponenten des zu erfassenden Streuflussfeldes zu erfassen. Eine solche umfassende Messung würde beispielsweise die Längs-, Quer- und die radiale Komponente messen und diese anschließend auswerten. Stattdessen wird mit der erfindungsgemäßen Sonde die Richtcharakteristik eines einzelnen Sensors erhöht, d.h. Signale in einem verbreiterten Winkelbereich um die Hauptprüfungsrichtung herum mit einem verbesserten Signal-Rausch-Verhältnis erfasst. Dabei lässt sich die einfache einkanalige Auswertung für einen Einzelsensor weiterhin nutzen - eine komplizierte mehrkanalige Auswertung, wie zur Bestimmung der Einzelkomponenten, ist nicht notwendig.

Die bisherigen Längs- und Querfehlerprüfungen konnten nicht die Lücke zur Detektion von Schrägfehlern schließen. Dies ist jedoch mit der erfindungsgemäßen Streuflusssonde jetzt möglich.

Die erfindungsgemäße Streuflusssonde eignet sich insbesondere für eine Fehlerprüfung von langgestreckten und rotationssymmetrischen Körpern, insbesondere von warmgewalzten und nahtlosen Rohren.

Dadurch, dass in einem Sensorpaket mehrere Sensoren in unterschiedlicher Winkelausrichtung gegenüber der Hauptprüfungsrichtung zusammengefasst sind und die Sensoren eines Sensorpaketes von dem von einem Fehler erzeugten magnetischen Streufluss gemeinsam beaufschlagt werden, weist das Sensorpaket gegenüber einzelner Sensoren oder Sensorpaaren eines Sensorlineals eine deutlich breitere Richtcharakteristik auf, so dass mit einer einzigen Längsfehlerprüfung ein weiter Bereich von schräg liegenden Fehlern um die Hauptprüfungsrichtung herum von idealerweise -90° bis +90° in Bezug auf die Rohrlängsachse abgedeckt werden kann. Geeignet ist für die Erfassung schräg liegender Fehler ein Bereich von -60° bis +60° bezogen auf die Hauptprüfungsrichtung. Wählbar ist auch ein Bereich von -45° bis 45°, wobei abhängig von der Prüfaufgabe auch ein Bereich von -30° bis 30° ausreichen kann.

Umfasst die Richtcharakteristik einer solchen Sonde mindestens 90°, ist es nun auch möglich, in einem einzigen Schritt die Prüfung auf Längs- und Querfehler unter Erfassung schräg verlaufender Fehler durchzuführen, wenn das auf den Prüfkörper einwirkende Magnetfeld unter 45° zu den Längs- bzw. Querfehlern ausgerichtet ist. Realisieren kann man dies z. B. durch zwei senkrecht zueinander ausgerichtete Magnetfelder, die gleichzeitig auf den Prüfkörper einwirken, so dass sich durch Überlagerung der Magnetfelder eine Ausrichtung unter 45° ergibt. Die in unterschiedlicher Winkelausrichtung angeordneten Sensoren der Sensorpakete können erfindungsgemäß übereinander lagenweise, nebeneinander oder ineinander liegend angeordnet sein. Wichtig ist hierbei, dass der Abstand der Sensoren in dem Sensorpaket so gering ist, dass das von einem zu detektierenden Fehler hervorgerufene Streuflussfeld alle Sensoren gemeinsam beaufschlagt.

In einer vorteilhaften Ausgestaltung der Erfindung ist vorgesehen, dass die Sensoren des Sensorpaketes seriell oder parallel miteinander verschaltet sind, wobei als Sensoren z. B. Induktionsspulen, GMR-Sensoren, AMR-Sensoren, TMR-Sensoren oder Hall-Sensoren verwendet werden können. Der Vorteil einer solchen Verschaltung liegt insbesondere darin, dass die erfindungsgemäße Sonde wie eine gewöhnliche Sonde nur ein Ausgabesignal liefert und herkömmliche Sonden in existierenden Prüfanlagen einfach ausgetauscht werden können, ohne dass weitere Auswerteeinheiten hinzugefügt werden müssen.

In einer weiteren Ausgestaltung ist es vorgesehen, dass die Sensoren alternativ horizontal oder vertikal bezogen auf die Rohroberfläche ausgerichtet sind. Die verschiedenen Ausrichtungen der Sensoren dienen zur Detektion der Streufeldkomponenten in radialer Richtung oder in Umfangsrichtung.

Bei der Verwendung von Induktionsspulen kann die enge Nachbarschaft der einzelnen Spulen erreicht werden, in dem für den horizontal orientierten Fall die Spulen in Multilagentechik übereinander angeordnet werden. Im Fall der vertikalen Anordnung werden die Spulen vorzugsweise ineinander verschachtelt und in unterschiedlichen Winkellagen angeordnet.

Da Induktionsspulen im Vergleich zu beispielsweise GMR- oder Hall-Sensoren nur unwesentlich schmaler sind als die zu erfassenden Streuflussfelder, bietet sich für Spulen eine übereinander liegende Anordnung an. GMR- oder Hall-Sensoren dagegen sind deutlich schmaler als das zu erfassende Streuflussfeld, so dass hier auch eine nebeneinander liegende Anordnung in unterschiedlicher Winkelausrichtung gewählt werden kann.

Nachfolgend wird insbesondere auf die Längs- und Schrägfehlerprüfung eingegangen. Bei Verwendung von horizontal orientierten Induktionsspulen als Sensoren sind diese erfindungsgemäß als auf einer Leiterplatte aufgedruckte Flachspulen ausgebildet, die eine langgestreckte und ringförmige Wicklung (gestreckte Ringspule) aufweisen. Die gestreckten Ringspulen haben eine hohe Empfindlichkeit für Längs- und Schrägfehler. Die übereinander lagenweise angeordneten Spulen eines Sensorpaketes werden mittels Multilagentechnik auf die Leiterplatte aufgebracht. Grundsätzlich ist gleiches auch für GMR- oder Hall-Sensoren möglich.

Durch dieses innovative Sensordesign kann in eine Streuflussprüfung auf Längsfehler oder Querfehler auch eine sichere Prüfung auf schräg liegende Fehler aufgenommen werden.

Die übereinander in unterschiedlichen Winkeln angeordneten Ringspulen sind erfindungsgemäß paarweise nebeneinander angeordnet und miteinander verschaltet. Über eine Differenzschaltung der Spulen wird eine sichere Detektion erreicht.

Besonders vorteilhaft ist bei der Längsfehlerprüfung vorgesehen, dass die Sensoren in einem Sensorpaket in abgestuften Winkelschritten zur Hauptprüfungsrichtung ausgerichtet sind, beispielsweise mit -30°, 0° und +30°. Durch diese Ausrichtungen wird eine Anpassung der Empfindlichkeit der Sensoren an Längs- oder Schrägfehler und damit eine deutliche Verbreiterung der Richtcharakteristik erreicht.

Versuche zeigten bei einer Längsfehlerprüfung an einem Rohr mit künstlichen Fehlern in Form von Nuten, die bei 0°, 30° und 60° zur Rohrlängsachse ausgerichtet waren, dass zur Detektion mit dieser Ausrichtung hinreichend hohe Signalamplituden über einen weiten Bereich von 0° bis etwa 60° erreicht werden. Mit dieser Streuflusssonde ist somit eine kombinierte Längs- und Schrägfehlerprüfung möglich.

Da bei der Streuflussprüfung Fehler, die senkrecht zur Magnetisierungsrichtung angeordnet sind prinzipiell eine größere Signalamplitude als schräg dazu liegende Fehler erzeugen, kann es bei senkrechter Fehlerorientierung zu einer Überempfindlichkeit bei der erfindungsgemäßen Sensoranordnung kommen. Vorteilhaft kann die Erfindung dahingehend weiter verbessert werden, dass die Empfindlichkeit der schräg orientierten Sensoren gegenüber den senkrecht zum erregenden Feld orientierten Sensoren angeglichen wird. Dies kann im Fall der Induktionsspulen durch eine Anpassung der Windungszahlen der beteiligten Spule und/oder durch eine Anpassung der Spulenfläche und/oder durch eine Abstandsveränderung erreicht werden. Dabei kann fallweise sogar auf die senkrecht zum erregenden Feld orientierte Spule verzichtet werden. Im Fall von GMR-, AMR-, TMR-, oder Hall-Sensoren, aber auch im Fall von Induktionssonden, kann eine entsprechende Anpassung durch ein Widerstandsnetzwerk erreicht werden.

Im Rahmen einer zerstörungsfreien Streuflussprüfung weist eine entsprechende Prüfeinrichtung neben der Streuflusssonde eine Magnetisierungseinheit auf, mit der der Körper für die Streuflussprüfung mit einem Magnetfeld magnetisiert wird. Hierbei ist erfindungsgemäß besonders vorteilhaft vorgesehen, dass z. B. das zu magnetisierende Rohr für die Streuflussprüfung mit einem Gleichfeld magnetisiert wird und das Magnetfeld mit seinen Feldlinien senkrecht zu etwaigen Längsfehlern in dem Rohr ausgerichtet ist. Der Vorteil der Gleichfeldmagnetisierung gegenüber der Wechselfeldmagnetisierung liegt darin, dass hiermit Fehler an der Außenoberfläche und an der Innenoberfläche des Rohres detektiert werden können.

Nachfolgend wird die Erfindung an Hand eines in mehreren Figuren dargestellten Ausführungsbeispiels näher erläutert. Es zeigen:
Figur 1 eine schematische Ansicht einer Vorrichtung zur zerstörungsfreien Streuflussprüfung von Rohren,
Figur 2a eine schematische Draufsicht eines Sensorlineals der erfindungsgemäßen Streuflusssonde,
Figur 2b eine Seitenansicht von Figur 2a.

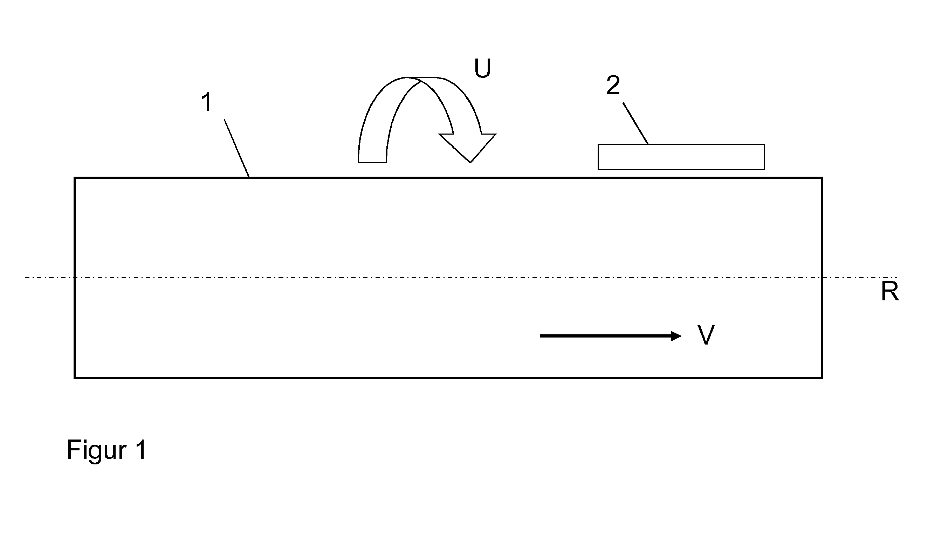

Figur 1 zeigt eine schematische Ansicht einer Vorrichtung zur zerstörungsfreien Streuflussprüfung eines warmgewalzten nahtlosen Rohres 1 aus ferromagnetischem Stahl auf Längsfehler und Schrägfehler. Das Rohr 1 weist in üblicher Weise eine zentrale in Längsrichtung des Rohres 1 verlaufende Rohrachse R auf. Der Kernbestandteil der Prüfvorrichtung ist eine Streuflusssonde, die Teil eines Prüfschuhes 2 ist. Für die Prüfung wird das Rohr 1 in Vorschubrichtung V bewegt und der Prüfschuh 2 wird in Umfangsrichtung U um das Rohr 1 herum bewegt, so dass das Rohr 1 auf einer wendelförmigen Bahn geprüft wird.

Die Vorrichtung zur zerstörungsfreien Streuflussprüfung weist neben dem Prüfschuh 2 eine nicht dargestellte Magnetisierungseinheit auf, mit der das Rohr 1 für die Streuflussprüfung mit einem Magnetfeld magnetisiert wird. Hierbei wird das zu magnetisierende Rohr 1 mit einem Gleichfeld magnetisiert und das Magnetfeld ist mit seinen Feldlinien senkrecht zu etwaigen Längsfehlern in dem Rohr 1 und somit quer zur Rohrachse R in Umfangsrichtung des Rohres 1 ausgerichtet. Die magnetischen Feldlinien sind somit in einer sogenannten Hauptprüfungsrichtung ausgerichtet. Der Vorteil der Gleichfeldmagnetisierung gegenüber der Wechselfeldmagnetisierung liegt darin, dass hiermit Fehler an der Außenoberfläche und an der Innenoberfläche des Rohres 1 detektiert werden können.

Eine Prüfung auf Querfehler erfolgt mit einem weiteren hier nicht dargestellten Prüfschuh mit einer entsprechend angepassten Streuflusssonde. Dabei wird die Magnetisierung in Längsrichtung des Rohres 1 (also um 90° gegenüber der Längsfehlerprüfung) gedreht. Hierdurch verläuft dann die Hauptprüfungsrichtung in Längsrichtung des Rohres 1. Entsprechend werden bei der Querfehlerprüfung auch die Sensoren, Sensorpaare und Sensorpakete um 90° gedreht gegenüber der Längsfehlerprüfung angeordnet.

Unter Fehlern werden hier oberflächennahe Ungänzen, wie beispielsweise Risse, Lunker, Einschlüsse, Poren oder Dopplungen, verstanden. Der Prüfschuh mit der Streuflusssonde ist üblicherweise Bestandteil einer Streufluss-Prüfeinrichtung, die außerdem noch eine Magnetisierungseinheit, eine Handhabungseinheit, eine Auswerteeinheit sowie eine Entmagnetisierungseinheit aufweist.

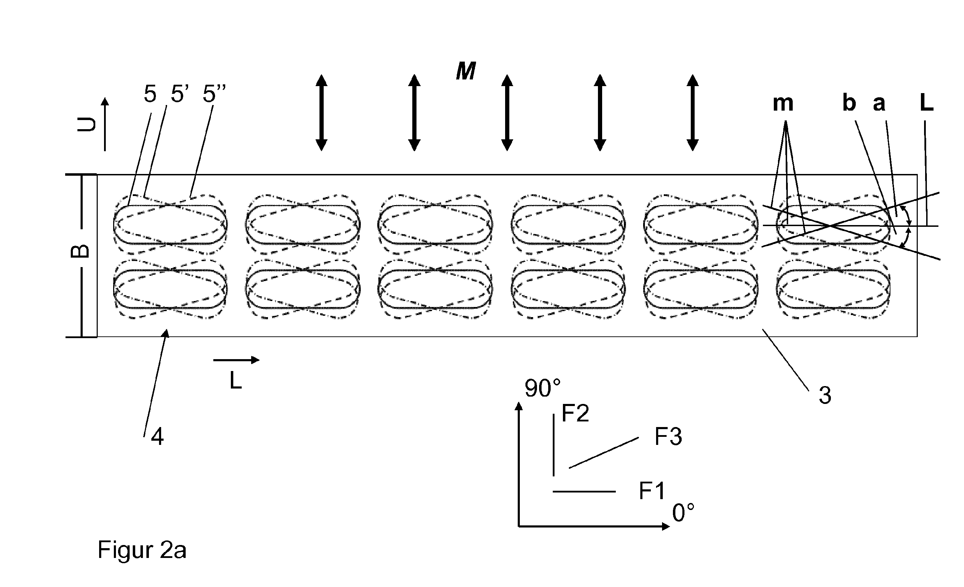

Figur 2a zeigt eine schematische Draufsicht eines Sensorlineals 3 der erfindungsgemäßen Streuflusssonde zur zerstörungsfreien Prüfung von warmgewalzten nahtlosen Rohren aus ferromagnetischem Stahl auf Längsfehler und Schrägfehler. Im vorliegenden Fall handelt es sich um horizontal orientierte Induktionsspulen. Hierbei wird horizontal als parallel zur Rohrachse R und somit parallel zur Außenoberfläche des Rohres 1 verstanden. Die Draufsicht zeigt die plane Prüfseite, d. h. die Seite die dem zu prüfenden Körper - hier dem Rohr 1 - zugewandt ist. Das Sensorlineal 3 hat eine langgestreckte, rechteckige Form mit einer Längsrichtung L, die parallel zur Rohrachse R ausgerichtet ist. Auf der Prüfseite des Sensorlineals 3 sind eine Vielzahl nebeneinander angeordneter erfindungsgemäßer Sensorpakete 4 aufgedruckt, die ihrerseits aus in unterschiedlichen Winkelausrichtungen lagenweise in Multilagentechnik übereinander angeordneten Sensoren 5, 5', 5" bestehen. Hierdurch wird eine enge Nachbarschaft der einzelnen Induktionsspulen der Sensoren 5, 5', 5" erreicht.

Das Sensorlineal 3 weist eine Breite B auf, die so gewählt ist, dass die in unterschiedlichen Winkeln zur Längsrichtung L ausgerichteten Sensoren 5, 5', 5" eines Sensorpaketes 4 entsprechend angeordnet werden können. In der Figur 2a sind drei übereinander angeordnete und als Induktionsspulen ausgebildete Sensoren 5, 5', 5" zu erkennen. Die Induktionsspulen sind als auf einer Leiterplatte aufgedruckte Flachspulen ausgebildet, die eine langgestreckte und ringförmige Wicklung (gestreckte Ringspule) aufweisen. Die gestreckten Ringspulen haben eine hohe Empfindlichkeit für Längs- und Schrägfehler. Die Sensoren 5, 5', 5" haben eine zentral und parallel zur deren Längserstreckung verlaufende Mittelachse m. Von dem mittleren Sensor 5' verläuft die Mittelachse m parallel zur Längsrichtung L des Sensorlineals 3. Der von der Längsrichtung L und der Mittelachse m eingeschlossene Winkel ist 0 Grad. Die Mittelachse m von dem unteren Sensor 5 verläuft mit einem Winkel a zur Längsrichtung L des Sensorlineals 3. Der von der Längsrichtung L und der Mittelachse m eingeschlossene Winkel ist größer 0 Grad und liegt vorzugsweise im Bereich von 1 Grad bis 20 Grad. Die Mittelachse m des oberen Sensors 5 verläuft mit einem Winkel b zur Längsrichtung L des Sensorlineals 3. Der von der Längsrichtung L und der Mittelachse m eingeschlossene Winkel b ist kleiner 0 Grad und liegt vorzugsweise liegt im Bereich von - 1 Grad bis - 20 Grad.

Auf der der Prüfseite gegenüber liegenden hier nicht dargestellten Rückseite des Sensorlineals 3 sind Leiterbahnen aufgedruckt, um die einzelnen Sensoren 5, 5', 5" des Sensorpaketes 4 elektrisch an ebenfalls auf der Rückseite des Sensorlineals 3 befestigten Steckkontakte anzuschließen. Jedes Sensorpaket 4 wird an einen separaten Auswertekanal angeschlossen.

Für eine Rohrprüfung auf Längsfehler ist das Sensorlineal 3 und damit die Streuflusssonde mit ihrer Längsrichtung L parallel zur längsgerichteten Rohrachse R des Rohres ausgerichtet. Die Rohrachse R verläuft zentral in dem Rohr in dessen Längsrichtung.

Üblicherweise werden unter Längsfehlern F1-Fehler verstanden, deren Längserstreckung parallel, also unter einem Winkel von 0° zur Rohrachse R, verläuft. Demnach verlaufen Querfehler F2 rechtwinklig, d. h. unter einem Winkel von 90° zur Rohrachse R. Alle anders orientierten Fehler werden Schrägfehler F3 genannt.

Neben dem Prüfschuh 2 mit der Streuflusssonde gehört zur Prüfeinrichtung noch die hier nicht dargestellte Magnetisierungseinheit, um das Rohr 1 temporär mit einem Magnetfeld M zu magnetisieren. Die Feldlinien des Magnetfeldes M verlaufen hierbei rechtwinklig zur Rohrachse R, da im vorliegenden Fall die Prüfeinrichtung für die Erkennung von Längsfehlern F1 und einen weiten Bereich von Schrägfehlern F3 ausgelegt ist.

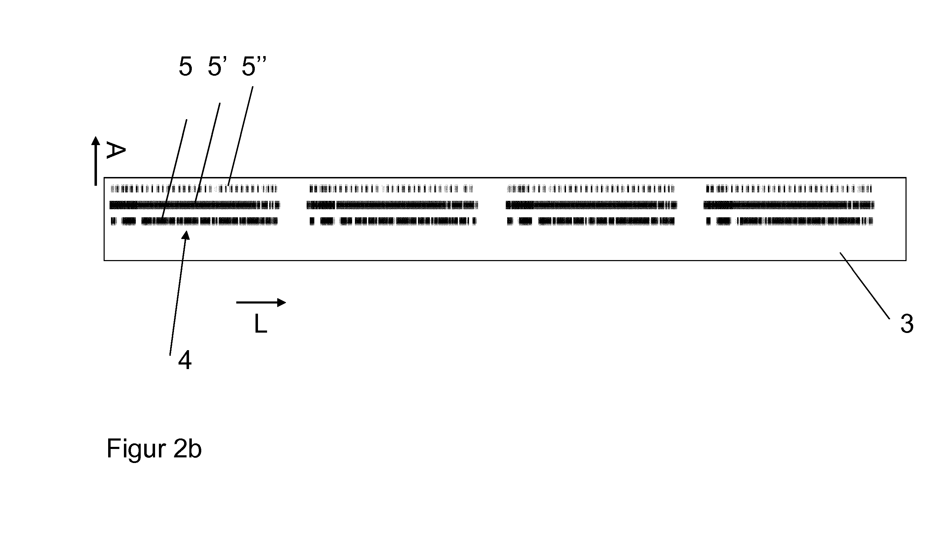

Aus der Seitenansicht der erfindungsgemäßen Streuflusssonde in Figur 2b ist ersichtlich, dass die einzelnen nebeneinander angeordneten Sensorpakete 4, jeweils aus einzelnen auf die Leiterplatte des Sensorlineals 3 aufgedruckten in radialer Richtung des Rohres A übereinander angeordneten Induktionsspulen als Sensoren 5, 5', 5" bestehen.

Zum Abgleich der erfindungsgemäßen Streuflusssonde werden eine oder mehrere auf einem Referenzwerkstück eingebrachte Nuten als Testfehlerreferenz verwendet. Die Nuten simulieren Längs-, Schräg- und Querfehler. Es zeigt sich, dass die Amplitudenhöhe der Messsignale der Sensoren 5, 5', 5" bei gleichartigen Testfehlern - wie hier in Form von Nuten - die in unterschiedlicher Orientierung zur Rohrachse R liegen, von der jeweiligen Winkellage der Nuten im Bereich von -90° bis +90° abhängt. Eine Änderung der Winkellage um 5° kann eine Änderung der Amplitudenhöhe um 10 bis 20% ausmachen.

Da die Änderung der Amplitudenhöhe ein Maß für die Permeabilitätsänderung ist und somit die Relevanz eines Fehlers beziehungsweise einer Ungänze darstellt, weist nun das Sensorpaket 4 mit den in unterschiedlichen Winkellagen ausgerichteten Sensoren 5, 5', 5" eine verbreiterte Richtcharakteristik auf, so dass auch für schräg liegende Fehler eine optimierte Empfindlichkeit in Bezug auf deren Detektionsmöglichkeit vorliegt. Da bei der Streuflussprüfung Fehler, die senkrecht zur Magnetisierungsrichtung angeordnet sind prinzipiell eine größere Signalamplitude als schräg dazu liegende Fehler erzeugen, kann es bei senkrechter Fehlerorientierung zu einer Überempfindlichkeit bei den erfindungsgemäßen Sensoren 5, 5', 5" kommen. Daher wird die Empfindlichkeit der schräg orientierten Sensoren 5, 5" gegenüber den senkrecht zum erregenden Feld orientierten Sensoren 5' angeglichen. Dies kann im Fall der Induktionsspulen durch eine Anpassung der Windungszahlen der beteiligten Spule und/oder durch eine Anpassung der Spulenfläche und/oder durch eine Abstandsveränderung erreicht werden. Dabei kann fallweise sogar auf die senkrecht zum erregenden Feld orientierte Spule verzichtet werden.

### Bezugszeichenliste

- 1: Rohr
- 2: Prüfschuh
- 3: Sensorlineal
- 4: Sensorpaket
- 5, 5', 5": Sensoren
- F1: Längsfehler
- F2: Querfehler
- F3: Schrägfehler
- M: Magnetfeld
- B: Breite Sensorlineal
- L: Längsrichtung des Sensorlineals
- V: Vorschubrichtung
- R: Rohrachse
- U: Umfangsrichtung des Rohres
- A: radiale Richtung des Rohres
- a: Winkel
- b: Winkel
- m: Mittelachse

## Patentansprüche

1. Streuflusssonde zur zerstörungsfreien Streuflussprüfung von Körpern aus magnetisierbarem Werkstoff, insbesondere von Rohren (1) aus ferromagnetischem Stahl, mit mehreren geradlinig hintereinander angeordneten Sensoren (5) zur Detektion von oberflächennahen Fehlern (F1, F2, F3) in dem Körper, **dadurch gekennzeichnet, dass** mindestens zwei gleichartige Sensoren (5, 5') in unterschiedlicher Winkelausrichtung gegenüber der Hauptprüfungsrichtung, übereinander, nebeneinander oder ineinander liegend als Sensorpaket (4) angeordnet und zusammengeschaltet sind, dass die hintereinander angeordneten Sensorpakete (4) einzeln vom erzeugten Streufluss eines vorhandenen Fehlers beaufschlagbar sind und die einzelnen Sensoren (5, 5') des Sensorpaketes (4) einen so geringen Abstand zueinander aufweisen, dass die zusammengeschalteten Sensoren (5, 5') eines Sensorpaketes (4) gemeinsam vom erzeugten Streufluss eines vorhandenen Fehlers beaufschlagt werden.

2. Streuflusssonde nach Anspruch 1, **dadurch gekennzeichnet, dass** ein Sensorpaket (4) mindestens drei Sensoren (5, 5', 5") aufweist.

3. Streuflusssonde nach Anspruch 1 und 2, **dadurch gekennzeichnet, dass** die Sensoren (5, 5', 5") des Sensorpaketes (4) elektrisch seriell oder parallel miteinander verschaltet sind.

4. Streuflusssonde nach mindestens einem der Ansprüche 1 bis 3, **dadurch gekennzeichnet, dass** die Sensoren (5, 5', 5") als Induktionsspulen, GMR-Sensoren, AMR-Sensoren, TMR-Sensoren oder Hall-Sensoren ausgebildet sind.

5. Streuflusssonde nach mindestens einem der Ansprüche 1 bis 4, **dadurch gekennzeichnet, dass** bei einer Induktionsspule als Sensor (5, 5', 5") diese als gestreckte Ringspule ausgebildet ist.

6. Streuflusssonde nach Anspruch 5, **dadurch gekennzeichnet, dass** die Induktionsspulen als ein elektrisch in Differenz geschaltetes Ringspulenpaar ausgebildet sind.

7. Streuflusssonde nach mindestens einem der Ansprüche 1 bis 6, **dadurch gekennzeichnet, dass** die Sensoren (5, 5', 5") horizontal oder vertikal zur Rohroberfläche angeordnet sind.

8. Streuflusssonde nach mindestens einem der Ansprüche 1 bis 7, **dadurch gekennzeichnet, dass** die Sensoren (5, 5', 5") in einem Sensorpaket (4) in einem Winkelbereich von -90° bis +90° um die Hauptprüfungsrichtung herum zur Erkennung von Fehlern angeordnet sind.

9. Streuflusssonde nach mindestens einem der Ansprüche 1 bis 8, **dadurch gekennzeichnet, dass** die Sensoren (5, 5', 5") in einem Sensorpaket (4) in einem Winkelbereich von -60° bis +60° um die Hauptprüfungsrichtung herum, vorzugsweise in einem Winkelbereich von -45° bis +45°um die Hauptprüfungsrichtung, besonders vorzugsweise in einem Winkelbereich von - 30° bis +30° um die Hauptprüfungsrichtung herum zur Erkennung von Fehlern angeordnet sind.

10. Streuflusssonde nach mindestens einem der Ansprüche 1 bis 9, **dadurch gekennzeichnet, dass** die Sensoren (5, 5', 5") eines Sensorpaketes (4) auf der Leiterplatte eines Sensorlineals (3) aufgedruckt sind.

11. Streuflusssonde nach Anspruch 10, **dadurch gekennzeichnet, dass** bei übereinander angeordneten Sensoren (5, 5', 5") diese als Sensorpaket (4) in Multilagentechnik aufgedruckt sind.

12. Streuflusssonde nach mindestens einem der Ansprüche 1 bis 11, **dadurch gekennzeichnet, dass** die einzelnen Sensoren (5, 5', 5") eines Sensorpaketes (4) in Bezug auf ihre Empfindlichkeit untereinander mittels eines Widerstandsnetzwerkes abgeglichen sind.

13. Streuflusssonde nach mindestens einem der Ansprüche 1 bis 12, **dadurch gekennzeichnet, dass** bei Verwendung von Induktionsspulen als Sensoren (5, 5', 5") eines Sensorpaketes (4) diese in Bezug auf ihre Empfindlichkeit untereinander mittels eines Widerstandsnetzwerkes und/oder durch eine Anpassung der Windungszahlen und/oder der Spulenfläche abgeglichen sind.

14. Anordnung mit einer Streuflusssonde nach mindestens einem der Ansprüche 1 bis 13, **dadurch gekennzeichnet, dass** diese eine Magnetisierungseinheit umfasst, mit der der zu prüfende Körper für die Streuflussprüfung mit einem Magnetfeld (M) magnetisierbar ist.

15. Anordnung nach Anspruch 14, **dadurch gekennzeichnet, dass** der zu prüfende Körper ein Rohr ist, das für die Streuflussprüfung mit einem Gleichfeld oder Wechselfeld magnetisiert ist und das Magnetfeld (M) mit seinen Feldlinien senkrecht in Umfangsrichtung, parallel zur Rohrlängsachse (R) in dem Rohr oder in einem Winkel zwischen 0° und 90° zur Rohrachse (R) orientiert ist.
